(19) Europäisches Patentamt
European Patent Office
Office européen des brevets

(11) Veröffentlichungsnummer: **0 181 625**
**B1**

(12) **EUROPÄISCHE PATENTSCHRIFT**

(45) Veröffentlichungstag der Patentschrift: **30.01.91**

(51) Int. Cl.⁵: **B 23 B 31/08**

(21) Anmeldenummer: **85114269.5**

(22) Anmeldetag: **08.11.85**

(54) Feinbearbeitungswerkzeug für Präzisionsbohrungen.

(30) Priorität: **10.11.84 DE 3441111**

(43) Veröffentlichungstag der Anmeldung:
**21.05.86 Patentblatt 86/21**

(45) Bekanntmachung des Hinweises auf die
Patenterteilung:
**30.01.91 Patentblatt 91/05**

(84) Benannte Vertragsstaaten:
**DE FR GB IT SE**

(56) Entgegenhaltungen:
**EP-A-0 084 117**
**CH-A- 90 138**
**CH-A- 321 980**
**DE-C- 384 291**
**GB-A-1 004 595**
**GB-A-1 358 558**

(73) Patentinhaber: **MAPAL Fabrik für**
**Präzisionswerkzeuge Dr. Kress KG**
**Obere Bahnstrasse 13 Postfach 1520**
**D-7080 Aalen (DE)**

(73) Patentinhaber: **ROBERT BOSCH GMBH**
**Postfach 10 60 50**
**D-7000 Stuttgart 10 (DE)**

(72) Der Erfinder haben auf ihre Nennung verzichtet

(74) Vertreter: **Gleiss, Alf-Olav, Dipl.-Ing.**
**Patentanwalt Silberburg Strasse 187**
**D-7000 Stuttgart 1 (DE)**

**Beschreibung**

Die Erfindung betrifft ein Feinbearbeitungswerkzeug gemäß Oberbegriff von Patentanspruch 1; siehe DE—C—384 291.

Es konnte beobachtet werden, daß infolge von Fertigungstoleranzen für den Aufnahmekegel der Maschinenspindel und den kegelförmigen Ansatz des Werkzeugschaftes die Werkzeuge beim automatischen Wechsel nicht in eine absolut exakte Position gebracht werden und diese eine Taumelbewegung mit einem Taumelschlag ausführen, der eine Größenordnung von 0,01 bis 0,02 mm aufweisen kann. Verstärkt wird dieser Taumelschlag auch dadurch, daß infolge der Zuführung des Kühlmittels durch die Spindel eine Verschmutzung der gegeneinander anliegenden Kegelflächen auftreten kann. Bereits sehr kleine, im Kühlmittel mitschwimmende Partikel, die sich im Bereich der Kegelflächen an diesen absetzen, bewirken eine merkliche Verstärkung der Taumelbewegung.

Bei Reibwerkzeugen werden zum Ausgleich dieser Taumelfehler und auch anderer Positionsfehler, die zwischen Vor- und Fertigbearbeitung auftreten können, z.B. Pendelhalter eingesetzt, in welchem die Reibahlen aufgenommen werden, wodurch Verbesserungen der Bearbeitungstoleranz erreicht werden können. Allerdings ist die Einsetzmöglichkeit von Pendelhaltern für in sogenannten Bearbeitungszentren eingesetzten Reibahlen begrenzt, da bei einer Drehzahl von über 1000 U/min infolge der auftretenden hohen Fliehkräfte ein Achsenausgleich nicht mehr stattfindet. Nachteilig wirkt sich bei Reibahlen auch aus, daß die Schnittiefe begrenzt ist und eine Veränderung der Lage der Bohrungsachse durch Reiben nicht möglich ist. Die Reibahle kann die durch die vorgearbeitete Bohrung vorgegebene Position nicht verändern Besonders nachteilig sind die Auswirkungen eines Taumelschlags bei Reibahlen für mehrstufige Bohrungen.

Aus diesen Gründen werden bei der modernen Bearbeitung von Bohrungen in sogenannten Bearbeitungszentren mehr und mehr Feinbohrwerkzeuge eingesetzt. Hierunter werden Werkzeuge verstanden, die aus einem Kopfteil mit eingesetzter, meist die Form eines Drehstahls aufweisender Schneide, einem Schaftteil und einem Aufnahmeteil bestehen, der den oben erwähnten Steilkegel aufweist.

Bei der Bearbeitung von Bohrungen mittels dieser Feinbohrwerkzeuge werden die an der Schneide infolge der Zerspanung auftretenden Schnittkräfte, also die senkrecht zur Schneide wirkende Hauptkraft und die in Richtung senkrecht zur Mittelachse wirkende Abdrängkraft durch den Schaft aufgenommen und zum Aufnahmeteil in die Maschinenspindel geleitet. Bei höherer Zerspanungsleistung treten hierbei größere Schnittkräfte auf, so daß auf den Schaft größere Torsions- und Biegekräfte wirken. Es ist daher das Bestreben, den Schaft möglichst torsions- und biegesteif auszubilden, was durch entsprechende Querschnittsbemessung und auch schon durch Verwendung von Hartmetall bewirkt wurde. Hierbei soll ein Durchbiegen des Schaftteils unter dem Einfluß der Schnittkraft soweit wie möglich vermieden werden.

Das von dem Feinbohrwerkzeug erzeugte Bohrungsmaß ergibt sich als Kreis um die effektive Drehachse des Werkzeugs. Diese effektive Drehachse ergibt sich aus deren theoretischer Lage in Verlängerung der Werkzeugaschse unter Berücksichtigung der Abweichungen, die sich durch die eine Biegung des Schaftteils bewirkende Abdrängkraft und durch infolge Fertigungstoleranzen des Steilkegels verursachte Fehler in der Aufnahme ergeben.

Während die Abweichung infolge der auftretenden Abdrängkraft bestimmten Gesetzmäßigkeiten unterliegt und somit berechenbar ist und bei der Einstellung des Schneidendurchmessers berücksichtigt werden kann, sind die Fehler, die von der Aufnahme herrühren, zufälliger Art und können daher bei der Einstellung des Schneidendurchmessers nicht berücksichtigt werden.

Diese Fehler sind von einer Größenordnung, die eine Feinbearbeitung von Präzisionsbohrungen mittels automatisch gewechselter Werkzeuge nicht gewährleisten kann.

So führt eine Auslenkung bzw. Abweichung der Achse von z.B. 0,01 mm zu einer Durchmesservergrößerung um den doppelten Betrag, also um 0,02 mm. Da bei einer Bohrung mit einem Durchmesser von 20 mm in der Feinbearbeitungstoleranz H7 die Toleranz nur 21 μm beträgt, würde diese Toleranz allein durch die Abweichung der Achse infolge der Aufnahmefehler aufgebraucht.

Vom nächstkommenden Stand der Technik gemäß DE—C 384 291 ist ein Werkzeug bekannt, das ein Kopfteil, ein biegeelastisches Schaftteil sowie ein in eine Spindel einer Werkzeugmaschine einsetzbares Aufnahmeteil aufweist. Bei dem bekannten Werkzeug handelt es sich um ein Mehrschneiden-Werkzeug, das heißt, das Kopfteil weist mehrere an seinem Umfang angeordnete Schneiden auf. Die Ausbildung des Werkzeugs, insbesondere der biegeelastische Schaftteil dient dazu, in der Praxis nicht zu vermeidende Fluchtungsfehler zwischen dem Werkzeug bzw. dem Werkzeugkopf und der zu bearbeitenden Bohrung auszugleichen.

Das Werkzeug hat den Nachteil, daß sich bei Fluchtungsfehlern von Werkzeug und Werkstückbohrung, die insbesondere bei der automatischen Werkzeug-Wechslung auftreten, sich ein konischer Bohrungsverlauf einstellt, so daß das Werkzeug für die Feinbearbeitung von Bohrungswänden praktisch nicht geeignet ist. Eine konische Bohrung kann auch auf einem sogenannten Taumelschlag des Werkzeugs beruhen, der sich auch bei genau fluchtender Anordnung von Werkzeug und zu bearbeitender Bohrung häufig bei automatischer Werkzeugwechslung ergibt und der auf einer Verschmutzung des Aufnahmekegels bzw. des Werkzeugschaftes beruht.

Es ist daher Aufgabe der Erfindung, ein Feinbearbeitungswerkzeug für Präzisionsbohrungen zu schaffen, bei dem auch bei automatischer Auswechslung des Werkzeugs eine hohe Feinbearbeitungsqualität erreicht wird.

Diese Aufgabe wird bei einem Werkzeug gemäß Oberbegriff des eingereichten Anspruchs 1 mit Hilfe der in diesem Anspruch genannten Merkmale gelöst.

Das erfindungsgemäße Feinbearbeitungswerkzeug besteht ebenfalls aus einem Kopfteil, einem Schaftteil und dem der Maschinenspindel entsprechend ausgebildeten Aufnahmeteil, das daher an die Gegebenheiten der verschiedenen Maschinen angepaßt sein muß. Am Umfang des Kopfteils sind Führungsleisten angebracht, deren eine der Schneide diametral gegenüberliegt. Der radiale Abstand der Führungsleisten von der Achse des Kopfteils ist nur wenige µm kleiner als der radiale Abstand der Schneide. Der Abstand der Schneide von der ihr diametral gegenüberliegenden Führungsleiste entspricht dem gewünschten Bohrungsmaß. Der Anschnitt der der Schneide gegenüberliegenden Führungsleiste liegt nur im wenige 1/100 mm hinter dem Anschnitt der Schneide. Wird bei einem so ausgebildeten Werkzeug der Kopfteil infolge Taumelschlag ausgelenkt, so würde bei biegungssteifer Ausbildung des Schaftteils der Bohrungsdurchmesser infolge der einen größeren Flugkreis beschreibenden Schneide vergrößert.

Dieser Taumelschlag und die daraus resultierende Vergrößerung des Bohrungsdurchmessers wird gemäß der Erfindung dadurch vermieden, daß der Schaftteil entsprechend dem Kennzeichen des Anspruchs 1 ausgebildet ist. In diesem Fall wird das Werkzeug durch die Schnittkraft in Richtung auf die gegenüberliegende Führungsleiste ausgelenkt, bis diese an der Bohrungswand anliegt. Dadurch ist gesichert, daß die Bohrung tatsächlich exakt dem gewünschten Bohrungsmaß entspricht, das durch den Abstand der Schneide von der ihr gegenüberliegenden Führungsleiste festgelegt war. Vorteilhafte Ausbildungen des erfindungsgemäßen Feinbearbeitungswerkzeuges ergeben sich aus den Unteransprüchen.

In der Zeichnung ist ein Ausführungsbeispiel des Erfindungsgegenstandes in schematischer Weise dargestellt.

Fig. 1 zeigt den ersten Kontakt der Hauptschneide der Messerplatte eines einen Taumelschlag aufweisenden Werkzeugs mit der Bohrungswandung eines vorgebohrten Werkstücks,

Fig. 2 zeigt das Kopfteil, nachdem es unter Einwirkung der Abdrängkraft in eine Lage gebracht wurde, in der die Achse des Kopfteils mit der Achse der Bohrung fluchtet.

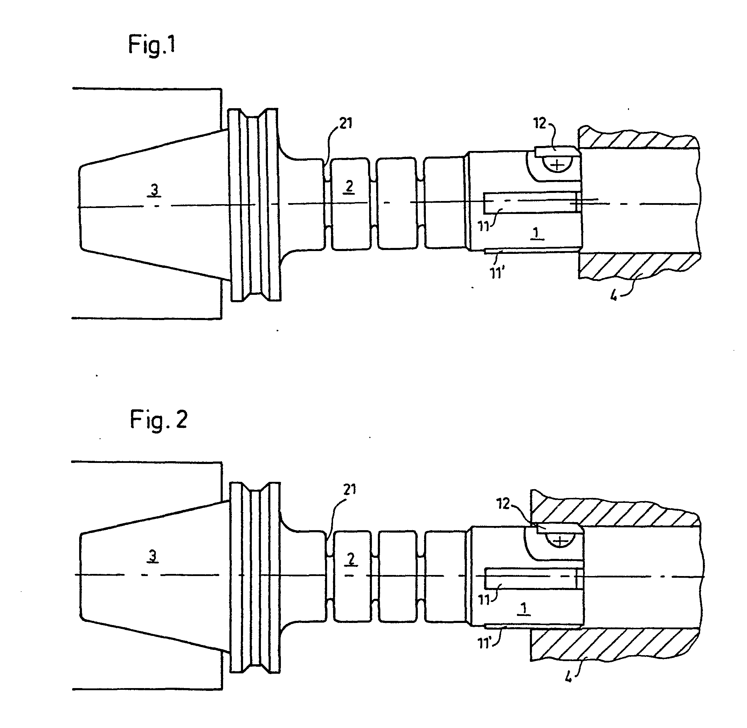

Das Feinbearbeitungswerkzeug besteht aus dem Kopfteil 1, dem Schaftteil 2 und dem kegelstumpfförmigen Aufnahmeteil 3. Das Kopfteil 1 weist in bekannter Weise zwei Führungsleisten 11, 11' auf, von denen die eine, 11', im wesentlichen der Messerplatte 12 diametral entgegengesetzt angeordnet ist. Das Schaftteil 2 weist gegenüber dem Kopfteil 1 und dem Aufnahmeteil 3 Einschnürungen 21 auf, die bei ausreichender Torsionssteifigkeit eine Durchbiegung ermöglichen, die erforderlich ist, um das Kopfteil 1 unter der Einwirkung der Abdrängkraft in eine mit der Achse der zu bearbeitenden Bohrung des Werkstücks 4 fluchtende Lage zu bringen, wie dies in Fig. 2 dargestellt ist.

## Patentansprüche

1. Feinbearbeitungswerkzeug für Präzisionsbohrungen, das einen Kopfteil mit einer Schneide, einen biegeelastischen Schaftteil und einen in eine Spindel einsetzbaren Aufnahmeteil aufweist, dadurch gekennzeichnet, daß der Kopfteil (1) mindestens zwei am Umfang angeordnete Führungsleisten (11, 11') und der Schaftteil (2) eine durch mindestens eine Einschnürung (21) hervorgerufene Biegeelastizität aufweist, die unter dem Einfluß der auf die Schneide (12) wirkenden Abdrängkraft und unter Mitwirkung der Führungsleisten ein Einschwenken der Achse des Kopfteils (1) in die Achse der zu bearbeitenden Bohrung gewährleistet.

2. Feinbearbeitungswerkzeug nach Ansprüche 1, dadurch gekennzeichnet, daß die Mantellinien des Schaftteils (2) konkav gekrümmt sind.

3. Feinbearbeitungswerkzeug nach einem der Ansprüche 1 oder 2, dadurch gekennzeichnet, daß der radiale Abstand der Schneide (12) von der Achse des Kopfteils (1) maximal 5 µm größer als der Abstand der Führungsleisten (11) ist.

4. Feinbearbeitungswerkzeug nach einem der Ansprüche 1 bis 3, dadurch gekennzeichnet, daß die Schneide (12) in axialer Richtung maximal einige 1/100 mm über die Führungsleisten (11) übersteht.

## Revendications

1. Outil de finition pour alésages de précision, comprenant une élément de tête avec une lame d'alésage, une tige flexible et un élément de réception pouvant être engagé dans une broche, caractérisé en ce que l'élément de tête (1) comprend au moins deux baguettes de guidage (11, 11') situées à la périphérie, et que la tige (2) présente une flexibilité provoquée par au moins une striction (21) qui assure, sous l'effet de coupe total exercé sur la lame (12) et avec le concours des baguettes de guidage, un alignement de l'axe de l'élément de tête (1) avec l'axe de l'alésage à usiner.

2. Outil de finition selon la revendication 1, caractérisé en ce que les génératrices de la tige (2) présentent une courbure concave.

3. Outil de finition selon l'une des revendications 1 ou 2, caractérisé en ce que la distance radiale de la lame (12) par rapport à l'axe de l'élément de tête (1) est supérieure au maximum de 5 µm à la distance des baguettes de guidage (11).

4. Outil de finition selon l'une des revendications 1 à 3, caractérisé en ce que, dans le sens axial, la lame (12) dépasse au maximum de quelques 1/100 mm des baguettes de guidage (11).

## Claims

1. Finishing tool for precision bores comprising a head part with a cutter, an elastically flexible shank part and a receiving part insertable in a spindle, characterized in that said head part (1) comprises at least two guide bars (11, 11') arranged on the circumference and said shank part (2) exhibits an elasticity of flexure which is caused by at least one constriction (21) and under the influence of the pushing-down force acting on said cutter (12) and with the cooperation of said guide bars ensures that the axis of said head part (1) swivels into the axis of said bore to be machined.

2. Finishing tool as defined in claim 1, characterized in that the surface lines of said shank part (2) are concavely curved.

3. Finishing tool as defined in one of claims 1 or 2, characterized in that the radial spacing of said cutter (12) from said axis of said head part (1) exceeds the spacing of said guide bars (11) by 5 µm at the most.

4. Finishing tool as defined in one of claims 1 to 3, characterized in that said cutter (12) protrudes in the axial direction beyond said guide bars (11) by a few 1/100 mm at the most.

Fig.1

Fig. 2